## Europäisches Patentamt
## European Patent Office
## Office européen des brevets

(11) Veröffentlichungsnummer: **0 014 854**
**A1**

(12) # EUROPÄISCHE PATENTANMELDUNG

(21) Anmeldenummer: **80100355.9**

(22) Anmeldetag: **23.01.80**

(51) Int. Cl.³: **A 01 F 29/10**
**A 01 F 29/00**

(30) Priorität: **23.01.79 DE 2902500**

(43) Veröffentlichungstag der Anmeldung:
**03.09.80 Patentblatt 80/18**

(84) Benannte Vertragsstaaten:
**CH FR GB IT NL**

(71) Anmelder: **Alois Pöttinger OHG**

**A-4710 Grieskirchen(AT)**

(72) Erfinder: **Leposa, Wolfgang**
**Sonnfeldsiedlung 30**
**A-4710 Grieskirchen(AT)**

(74) Vertreter: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr. rer.**
**nat. G. Bezold Maximilianstrasse 43**
**D-8000 München 22(DE)**

(54) **Feldhäcksler.**

(57) Die Erfindung bezieht sich auf einen Feldhäcksler, bestehend aus einer Zerkleinerungseinrichtung (22), ferner aus einer das Erntegut mit Preßwalzen (26, 27) verdichtende und an den Schneidmund der Zerkleinerungseinrichtung (22) heranführende Einzugsvorrichtung (23), sowie aus einer Vorrichtung zum Aufnehmen (1) des Erntegutes und zum Zuführen desselben zur Einzugsvorrichtung (23), wobei die Aufnahmevorrichtung (1) eine mit Tasträdern (16) versehene, an Führungen heb- und senkbar gelagerte, quer zur Fahrtrichtung angeordnete Aufnahmetrommel (2) umfaßt, die das Erntegut über eine Förderfläche (29) einer im Abstand über der Aufnahmetrommel (2) an Führungen höhenveränderlich gelagerten Förderschnecke (3) zuführt, bei welchem Feldhäcksler die Aufnahmevorrichtung (1) so ausgestaltet ist, daß über den Bereich der notwendigen Höhenveränderlichkeit der Aufnahmetrommel das Zusammenwirken zwischen der Förderschnecke (3) und der Aufnahmetrommel (2) bzw. der Förderfläche (29) stets einwandfrei durchzuführen ist, indem die Aufnahmetrommel (2) mit der Förderschnecke (3) zu einer gemeinsamen Bewegung verbunden ist.

./...

EP 0 014 854 A1

Fig. 1

**PATENTANWÄLTE**

REPRESENTATIVES BEFORE THE
EUROPEAN PATENT OFFICE

**A. GRÜNECKER**
DIPL.-ING.

**H. KINKELDEY**
DR.-ING.

**W. STOCKMAIR**
DR.-ING. · AeE (CALTECH)

**K. SCHUMANN**
DR. RER. NAT. · DIPL.-PHYS

**P. H. JAKOB**
DIPL.-ING.

**G. BEZOLD**
DR. RER. NAT. · DIPL.-CHEM

8 MÜNCHEN 22
MAXIMILIANSTRASSE 43

EP 144

Alois Pöttinger OHG
A-4710 Grieskirchen, Österreich

<u>Feldhäcksler</u>

<u>Beschreibung</u>

Die Erfindung bezieht sich auf einen Feldhäcksler, bestehend aus einer Zerkleinerungseinrichtung, ferner aus einer das Erntegut mit Preßwalzen verdichtende und an den Schneidmund der Zerkleinerungseinrichtung heranführende Einzugsvorrichtung, sowie aus einer Vorrichtung zum Aufnehmen des Erntegutes und zum Zuführen desselben zur Einzugsvorrichtung, wobei die Aufnahmevorrichtung eine mit Tasträdern versehene, an Führungen heb- und senkbar gelagerte, quer zur Fahrtrichtung angeordnete Aufnahmetrommel umfaßt, die das Erntegut über eine Förderfläche einer

2

im Abstand über der Aufnahmetrommel an Führungen höhenveränderlich gelagerten Förderschnecke zuführt.

Bei solchen Feldhäckslern ist es mit Rücksicht auf die nicht vermeidbaren Bodenunebenheiten unerläßlich, daß die Aufnahmetrommel durch die Tasträder dem Boden angepaßt wird. Dadurch ergibt sich eine Beeinträchtigung der Funktion der Aufnahmevorrichtung, weil dabei der Abstand zwischen der Aufnahmetrommel und der Förderschnecke bzw. der zugeordneten Förderfläche sich beträchtlich ändert.

Der Erfindung liegt die Aufgabe zugrunde, bei einem Feldhäcksler der eingangs geschilderten Art die Aufnahmevorrichtung so auszugestalten, daß über den Bereich der notwendigen Höhenveränderlichkeit der Aufnahmetrommel das Zusammenwirken zwischen der Förderschnecke und der Aufnahmetrommel bzw. der Förderfläche stets einwandfrei ist.

Zur Lösung dieser Aufgabe sieht die Erfindung vor, daß bei einem Feldhäcksler der eingangs geschilderten Art die Aufnahmetrommel mit der Förderschnecke zu einer gemeinsamen Bewegung verbunden ist.

Um trotz der damit erzwungenen Höhenbewegung der Förderschnecke deren optimale Zusammenarbeit mit den Vorpreßwalzen der Einzugsvorrichtung zu gewährleisten, können gemäß der Erfindung die Führungen der Förderschnecke diese während ihrer Höhenbewegung in etwa gleichbleibendem Abstand zur Einzugsvorrichtung halten.

Eine besonders günstige bauliche Ausgestaltung des Feldhäckslers ergibt sich dann, wenn von einem Feldhäcksler ausgegangen wird, bei welchem die Führungen für die Aufnahmetrommel und die Führungen für die Förderschnecke jeweils als am Maschinenrahmen angelenkte Schwenkarme ausgebildet sind, wobei jedoch die Schwenkarme der Förderschnecke mit den Schwenkarmen der Aufnahmetrommel durch mindestens einen im Abstand von den Anlenkstellen der Schwenkarme an diesen angelenkten Kupplungshebel parallelogrammartig verbunden sind.

Damit ein solcher Feldhäcksler ungeachtet der Kopplung der Aufnahmetrommel mit der Förderschnecke auch unterschiedliche Mengen an Erntegut aufnehmen und weiterfördern kann, ohne daß dabei Störungen auftreten, kann gemäß der Erfindung der Kupplungshebel an seinem der Förderschnecke benachbarten Ende mit einem Langloch versehen sein, in welches ein am Schwenkarm der Förderschnecke befestigter Kupplungsbolzen eingreift. Dabei kann die Förderschnecke und die Aufnahmetrommel durch ein elastisches Druck- oder Zugmittel im Mindestabstand gehalten sein.

Durch diese Maßnahmen ergibt sich eine Abstandsvergrößerung zwischen der Förderschnecke und der Aufnahmetrommel, wenn größere Ballen an Erntegut aufgenommen und weitergefördert werden, wobei aber die Vorpressung dieses Erntegutes auch bei derart unterschiedlichen Fördermengen gewährleistet bleibt.

Für die Wirkungsweise der Förderschnecke ist es vorteilhaft, wenn dabei zumindest ein Teil der Förderfläche mit der Aufnahmetrommel zur gemeinsamen Höhenbewegung verbunden ist.

Um die Höhenbewegung der Förderschnecke relativ zur Aufnahmetrommel in der von Einsatz zu Einsatz verschiedenen günstigsten Art einstellen zu können, kann gemäß der Erfindung die Länge des Langloches mittels eines verstellbaren Anschlags veränderbar sein.

Der Abstand zwischen der Förderschnecke und den Vorpreßwalzen der Einzugsvorrichtung kann zur einwandfreien Zu-

4

sammenarbeit derselben besonders günstig in der Weise im wesentlichen konstant gehalten werden, daß die Schwenkarme der Förderschnecke und die Schwenkarme der Aufnahmetrommel so lang sind, daß ihre Anlenkstellen am Maschinenrahmen im Bereich der Drehachsen für die vor dem Schneidmund angeordneten Preßwalzen, vorzugsweise mit diesen fluchtend, angeordnet sind. Auf diese Art und Weise kann gegebenenfalls auch eine besonders einfache Anlenkung der Schwenkarme erzielt werden. Außerdem wird eine besonders einfache Antriebsmöglichkeit geschaffen. Außerdem ist es in diesem Falle möglich, die Aufnahmevorrichtung mit der Einzugsvorrichtung zu einer Baueinheit zu vereinen, die am Feldhäcksler an- und abbaubar gelagert sein kann.

Es ist aber auch möglich, nur die Aufnahmevorrichtung als Anbaueinheit an den Feldhäcksler auszugestalten, wobei dann die Einzugsvorrichtung am Feldhäcksler verbleibt.

In der Zeichnung ist ein Ausführungsbeispiel der Erfindung schematisch dargestellt. Dabei zeigen:

Fig. 1 eine Seitenansicht der wesentlichen Feldhäckslereinrichtungen im Schnitt,

Fig. 2 eine Seitenansicht der Aufnahmevorrichtung einschließlich deren Lagerung,

Fig. 3 dazu eine Stirnansicht in Blickrichtung entgegen der Fahrtrichtung,

Fig. 4 eine Einzelheit der Schwenklagerung der Förderschnecke und der Aufnahmetrommel in Stirnansicht und

Fig. 5 dazu eine Seitenansicht im Schnitt nach der Linie V-V in Fig. 4.

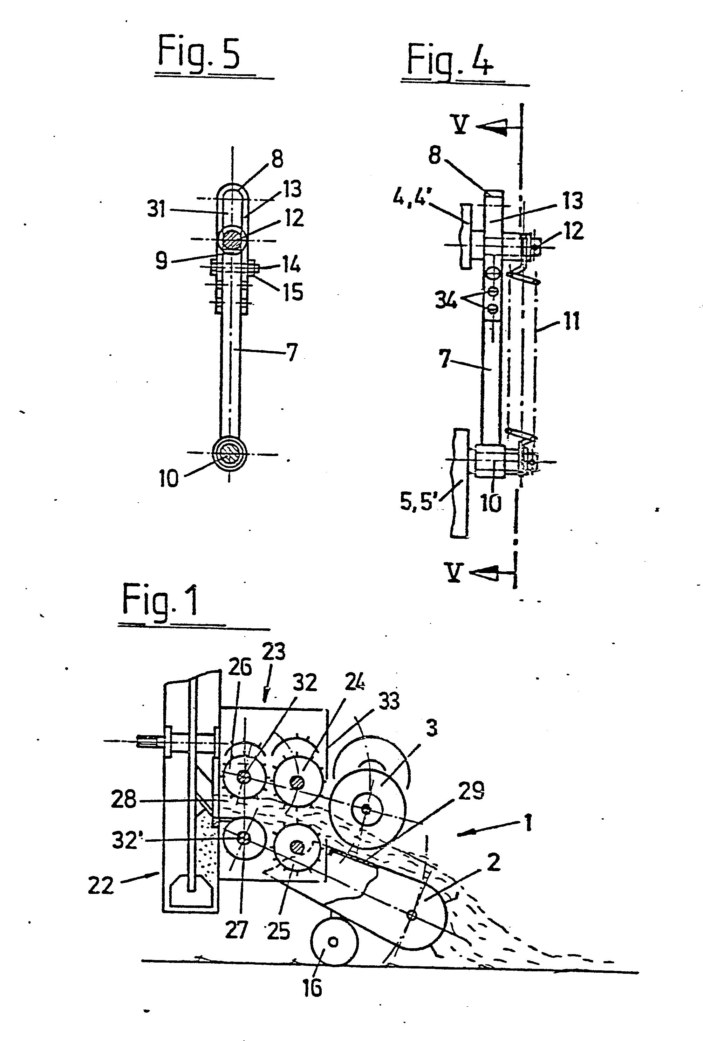

Wie aus Fig. 1 ersichtlich, weist der Feldhäcksler eine insgesamt mit 22 bezeichnete Zerkleinerungseinrichtung, ferner eine dieser vorgeschaltete, insgesamt mit 23 bezeichnete Einzugsvorrichtung und eine davor angeordnete, insgesamt mit 1 bezeichnete Aufnahmevorrichtung auf.

Im gezeichneten Ausführungsbeispiel besteht die Zerkleinerungseinrichtung 22 aus einem um eine horizontale Achse drehbaren Scheibenmesserrad, wobei die Messer am Schneidmund 28 vorbeistreichen.

Es könnte aber auch zum Häckseln eine Schneidtrommel mit querliegender Drehachse Verwendung finden.

Vor dem Schneidmund 28 ist eine untere Preßwalze 27 und im Abstand darüber eine damit zusammenwirkende obere Preßwalze 26 vorgesehen, die jeweils mittels einer Welle 32 bzw. 32' drehbar gelagert und angetrieben sind.

Vor diesen Preßwalzen 26 und 27 ist eine untere Vorpreßwalze 25 und eine obere Vorpreßwalze 24 ebenfalls drehbar gelagert.

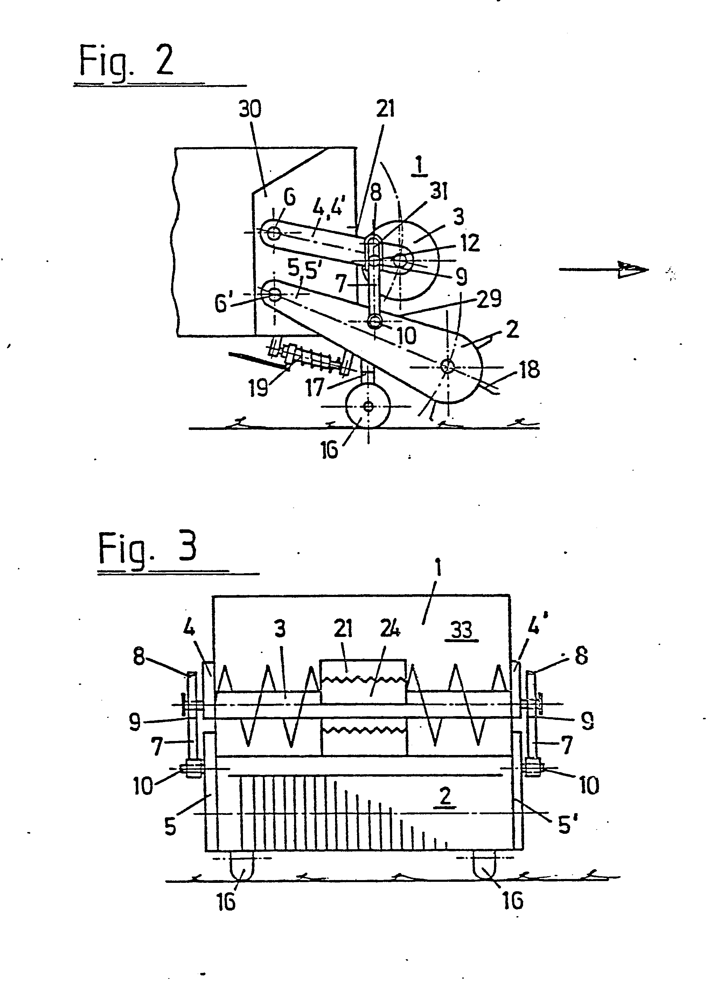

Den Vorpreßwalzen 24 und 25 wird das Erntegut durch eine in der die Einzugsvorrichtung stirnseitig abschließende Abdeckung 33 angeordnete Einwurföffnung 21 zugeführt. Dies erfolgt durch eine Förderschnecke 3, die quer vor der Einzugsvorrichtung 23 drehbar und antreibbar gelagert ist. Wie aus Fig. 3 ersichtlich, weist die Förderschnecke 3 im Bereich ihrer Enden gegenläufige Schneckengänge auf, wobei der Mittenbereich der Förderschnecke 3 frei von Schneckengängen ist. Dort sind an der Achse der Förderschnecke übliche Mitnehmerleisten (nicht gezeichnet) angebracht.

Unterhalb der Förderschnecke 3 ist - in Fahrtrichtung gesehen vorgelagert - eine Aufnahmetrommel 2 in einem

6

gewissen Abstand drehbar und antreibbar angeordnet. Die Aufnahmetrommel 2 weist etwa radial davon abstehende Mitnehmerzinken 18 auf.

Etwa tangential schließt sich an die Aufnahmetrommel 2 eine schräg nach oben führende Förderfläche 29 an.

Die Aufnahmetrommel 2 ist mittels eines linken Schwenkarmes 5' und eines rechten Schwenkarmes 5 höhenbeweglich gelagert. Der Schwenkarm 5 bzw. 5' ist zu diesem Zweck mittels einer Lagerstelle 6 bzw. 6' am Maschinenrahmen 30 angelenkt.

Der Schwenkarm 5, gegebenenfalls auch der zweite Schwenkarm 5', stützt sich auf dem Boden mit einem Tastrad bzw. einem Tastradpaar 16 ab, wobei die Tasträder 16 über Träger 17 am Schwenkarm 5 und 5' befestigt sind.

Außerdem greift am Schwenkarm 5 bzw. 5' eine am Maschinenrahmen 30 gelagerte Heb- und Senkeinrichtung 19 an, mit Hilfe welcher die Schwenkarme 5 und 5' zusammen mit den Tasträdern 16 nach oben geschwenkt werden, wenn der Häcksler sich auf dem Transportwege befindet.

Die Förderschnecke 3 ist mittels Schwenkarmen 4 und 4' am Maschinenrahmen 30 höhenbeweglich gelagert, wobei die Schwenkarme 4 und 4' mittels der Lagerstellen 6 am Rahmen 30 angelenkt sind.

An jedem Schwenkarm 5 bzw. 5' ist mittels eines Anlenkzapfens 10 ein Kupplungsarm 7 angebracht, der sich etwa vertikal mit seinem anderen Ende zu den Schwenkarmen 4 bzw. 4' erstreckt. Im Bereich des oberen Endes jedes Kupplungshebels 7 ist ein in dessen Längsrichtung verlaufendes Langloch 31 vorgesehen, in welches jeweils ein am Schwenkarm 4 bzw. 4' befestigter Kupplungsbolzen 12 eingreift.

Wie aus den Fig. 4 und 5 ersichtlich, wird im gezeichneten Ausführungsbeispiel das obere Ende des Kupplungshebels 7 durch einen U-förmigen Bügel 13 gebildet, der an seinen freien Enden mittels einer Schraube 14 und einer zugehörigen Mutter 15 am Kupplungshebel 7 so befestigt ist, daß das Ende des Kupplungshebels 7 gleichzeitig als Anschlag 9 für den Kupplungsbolzen 12 dient. Die obere Begrenzung für den Kupplungsbolzen 12 wird dabei durch den Bogen 8 des U-förmigen Bügels 13 dargestellt. Um die Länge des Langloches 31 verändern zu können, sind im Kupplungshebel 7 mehrere Befestigungslöcher 34 vorgesehen, so daß der U-förmige Bügel 13 mittels der Schraube 14 stufenweise nach unten versetzt werden kann, wodurch die Länge des Langloches 31 verringert wird.

Am Kupplungsbolzen 12 ist eine Zugfeder 11 befestigt, deren anderes Ende am Anlenkzapfen 10 angreift. Diese Zugfedern 11 pressen die Kupplungsbolzen 12, die an den Schwenkarmen 4 und 4' befestigt sind, gegen das obere Ende 9 der Kupplungshebel 7 und halten so die Schwenkarme 4 und 4' im Mindestabstand zu den Schwenkarmen 5 und 5'.

Wie insbesondere aus Fig. 2 ersichtlich ist, sind die Schwenkarme 4 und 4' für die Förderschnecke 3 gegenüber den Schwenkarmen 5 und 5' für die Aufnahmetrommel 2 kürzer ausgebildet, so daß die Förderschnecke 3 gegenüber der Aufnahmetrommel 2 in der durch einen Pfeil angegebenen Fahrtrichtung zurückgesetzt ist. Die Länge der Schwenkarme 4 und 4' der Förderschnecke 3 ist aber trotzdem beträchtlich, weil sich die Lagerstellen 6 der Schwenkarme 4 und 4' im Bereich der Preßwalze 26 befinden und gegebenenfalls sogar mit deren Drehachse 32 zusammenfallen. Infolge dieser beträchtlichen Länge der Schwenkarme 4 und 4' und der nur leicht schräg nach unten gewählten Stellung dieser Schwenkarme im Normalbetrieb gewährleistet, daß die Förderschnecke 3 bei einer relativen Höhenbewegung zur Aufnahmetrommel 2 im wesentlichen den Abstand zu den Preßwalzen 24 und 25 der Einzugsvorrichtung beibehält.

Im gezeichneten Ausführungsbeispiel dienen die Schwenkarme 5 und 5' der Aufnahmetrommel 2 auch als Träger der Förderfläche 29, an welche nach vorne die Abstreifer (nicht gezeichnet) der Aufnahmetrommel 2, zwischen denen die Zinken 18 herausgreifen, anschließen. Die Förderfläche 29 macht die Bewegung der Schwenkarme 5 und 5' mit, so daß der Abstand zwischen der Förderschnecke 3 und der Förderfläche 29 im wesentlichen unverändert bleibt, was für die Arbeitsweise der Förderschnecke von wesentlicher Bedeutung ist. Der Abstand wird nur in den Fällen etwas größer, in welchen von der Aufnahmetrommel 2 größere Mengen von Erntegut, z.B. in Ballenform, aufgenommen und über die Förderfläche 29 der Förderschnecke 3 zugeführt wird. In diesen Fällen wird die Förderschnecke 3 durch die große Menge des Erntegutes vorübergehend relativ zur Förderfläche 29 angehoben, so daß auch in diesem Falle keine Verstopfungen vorkommen können. Dabei wird das Erntegut infolge der Wirkung der Federn 11 von der Förderschnecke 3 besonders kräftig zusammengepreßt, was für das Zusammenarbeiten der Förderschnecke 3 mit den Vorpeßwalzen 24 und 25 sehr vorteilhaft ist.

Die Anlenkstellen 6 und 6' sowie der Anlenkzapfen 10 am Schwenkarm 5 bzw. 5' und der Kupplungsbolzen 12 am Schwenkarm 4 bzw. 4' sind im gezeichneten Ausführungsbeispiel jeweils etwa lotrecht übereinander angeordnet, so daß die Schwenkarme 4 und 4' bzw. 5 und 5' durch die Kupplungshebel 7 parallelogrammartig untereinander verbunden sind.

Durch die geschilderten Maßnahmen wird ein Feldhäcksler geschaffen, dessen Aufnahmetrommel 2 sich über die Tasträder 16 den Bodenunebenheiten anpassen kann, ohne daß dadurch die Arbeitsweise der Förderschnecke 3 beeinträchtigt wird. Die Förderschnecke 3 muß einerseits mit der Aufnahmetrommel 2 bzw. der Förderfläche 29 zusammenarbeiten und zu diesem Zweck zu diesen Elementen einen möglichst gleichbleibenden Abstand aufweisen. Außerdem muß die Förderschnecke 3 mit den Vorpreßwalzen 24 und 25 zusammenwirken, ohne daß die Arbeitsweise durch eine Höhenbewegung der Förderschnecke 3 beeinträchtigt wird. Dies ist dadurch erreicht worden, daß sich bei der Höhenbewegung der Förderschnecke 3 der Abstand zu den Vorpreßwalzen praktisch nicht ändert. Endlich wird die Aufnahmevorrichtung auch der Bedingung gerecht, daß sie sehr unterschiedliche Mengen an Erntegut aufnehmen und weiterfördern muß, ohne daß sich dabei Störungen ergeben. Dies ist erreicht, indem die Förderschnecke 3 eine relative Höhenbewegung zur Aufnahmetrommel 2 ausführen und so den Abstand vergrößern kann, um vorübergehend auch große Mengen an Erntegut durchlassen und weiterfördern zu können.

So erfüllt die Aufnahmevorrichtung die vielfältigen, sich zum Teil widersprechenden Bedingungen in optimaler Weise.

0014854

PATENTANWÄLTE

REPRESENTATIVES BEFORE THE
EUROPEAN PATENT OFFICE

A. GRÜNECKER
DIPL.-ING

H. KINKELDEY
DR.-ING

W. STOCKMAIR
DR.-ING · AoE (CALTECH)

K. SCHUMANN
DR RER NAT · DIPL.-PHYS

P. H. JAKOB
DIPL.-ING

G. BEZOLD
DR RER NAT · DIPL.-CHEM

8 MÜNCHEN 22
MAXIMILIANSTRASSE 43

EP 144

Alois Pöttinger OHG
A-4710 Grieskirchen, Österreich

Patentansprüche

1. Feldhäcksler, bestehend aus einer Zerkleinerungseinrichtung, ferner aus einer das Erntegut mit Preßwalzen verdichtende und an den Schneidmund der Zerkleinerungseinrichtung heranführende Einzugsvorrichtung, sowie aus einer Vorrichtung zum Aufnehmen des Erntegutes und zum Zuführen desselben zur Einzugsvorrichtung, wobei die Aufnahmevorrichtung eine mit Tasträdern versehene, an Führungen heb- und senkbar gelagerte, quer zur Fahrtrichtung angeordnete Aufnahmetrommel umfaßt, die das Erntegut über eine Förderfläche einer im Abstand über der Aufnahmetrommel an Führungen höhenveränderlich gelagerten Förderschnecke zuführt, d a d u r c h  g e k e n n - z e i c h n e t , daß die Aufnahmetrommel (2) mit der Förderschnecke (3) zu einer gemeinsamen Bewegung verbunden ist.

2. Feldhäcksler nach Anspruch 1, d a d u r c h  g e - k e n n z e i c h n e t , daß die Führungen der Förderschnecke (3) diese während ihrer Höhenbewegung in etwa gleichbleibendem Abstand zur Einzugsvorrichtung (23) hält.

3. Feldhäcksler nach Anspruch 1 oder 2, bei welchem die Führungen für die Aufnahmetrommel (2) und die Führungen für die Förderschnecke (3) jeweils als am Maschinenrahmen (30) angelenkte Schwenkarme ausgebildet sind, d a d u r c h  g e k e n n z e i c h n e t , daß die Schwenkarme (4,4') der Förderschnecke (3) mit den Schwenkarmen (5,5') der Aufnahmetrommel (2) durch mindestens einen im Abstand von den Anlenkstellen (6,6') der Schwenkarme (4,4' und 5,5') an diesen angelenkten Kupplungshebel (7) parallelogrammartig verbunden sind.

4. Feldhäcksler nach Anspruch 1 oder 2, d a d u r c h  g e k e n n z e i c h n e t , daß die Verbindung der Förderschnecke (3) mit der Aufnahmetrommel (2) eine den Abstand zur Aufnahmetrommel (2) vergrößernde Höhenbewegung der Förderschnecke (3) zuläßt.

5. Feldhäcksler nach den Ansprüchen 3 und 4, d a - d u r c h  g e k e n n z e i c h n e t , daß der Kupplungshebel (7) an seinem der Förderschnecke (3) benachbarten Ende mit einem Langloch (31) versehen ist, in welches ein am Schwenkarm (4 bzw. 4') der Förderschnecke (3) befestigter Kupplungsbolzen (12) eingreift.

6. Feldhäcksler nach Anspruch 5, d a d u r c h g e -
k e n n z e i c h n e t , daß die Länge des Langloches (31) mittels eines verstellbaren Anschlags
(9) veränderbar ist.

7. Feldhäcksler nach Anspruch 5, d a d u r c h g e -
k e n n z e i c h n e t , daß die Förderschnecke
(3) und die Aufnahmetrommel (2) durch ein elastisches Druck- oder Zugmittel im Mindestabstand gehalten sind.

8. Feldhäcksler nach den Ansprüchen 6 und 7, d a -
d u r c h g e k e n n z e i c h n e t , daß am
Kupplungsbolzen (12) eine mit dem anderen Ende am
Schwenkarm (5 bzw. 5') für die Aufnahmetrommel (2)
befestigte Zugfeder (11) angreift.

9. Feldhäcksler nach mindestens einem der Ansprüche 1
bis 8, d a d u r c h g e k e n n z e i c h n e t ,
daß mindestens ein Teil der Förderfläche (29) mit
der Aufnahmetrommel (2) zur gemeinsamen Höhenbewegung verbunden ist.

10. Feldhäcksler nach mindestens einem der Ansprüche 1
bis 9, d a d u r c h g e k e n n z e i c h n e t ,
daß die Schwenkarme (4,4') der Förderschnecke (3)
und die Schwenkarme (5,5.') der Aufnahmetrommel (2)
so lang sind, daß ihre Anlenkstellen (6,6') am Maschinenrahmen (30) im Bereich der Drehachsen (32,32')
für die vor dem Schneidmund (28) angeordneten Preßwalzen (26,27), vorzugsweise mit diesen fluchtend,
angeordnet sind.

0014854

## Fig. 5

## Fig. 4

## Fig. 1

## Fig. 2

## Fig. 3

| | | | | |
|---|---|---|---|---|
| ⟨⟨⟨ | **Europäisches Patentamt** | **EUROPÄISCHER RECHERCHENBERICHT** | Nummer der Anmeldung | |
| | | | EP 80 10 0355 | |

<table>
<tr><td colspan="3" align="center"><b>EINSCHLÄGIGE DOKUMENTE</b></td><td><b>KLASSIFIKATION DER ANMELDUNG (Int.Cl.³)</b></td></tr>
<tr><td>Kategorie</td><td>Kennzeichnung des Dokuments mit Angabe, soweit erforderlich, der maßgeblichen Teile</td><td>betrifft Anspruch</td><td></td></tr>
<tr><td></td><td><u>AT - B - 235 626</u> (ALFA-LAVAL AG)<br>* ganzes Dokument *<br>--</td><td>1,2,9</td><td>A 01 F 29/10<br>A 01 F 29/00</td></tr>
<tr><td></td><td><u>CH - A - 381 006</u> (SPEISER)<br>* Seite 2, Zeilen 12 bis 44; Fig. 1 *<br>--</td><td>5,8</td><td></td></tr>
<tr><td></td><td><u>DE - U - 1 938 359</u> (K. MENGELE & SÖHNE MASCHINENFABRIK)<br>* Seite 4, Zeile 16 bis Seite 5, Zeile 9 *<br>--</td><td>1</td><td><b>RECHERCHIERTE SACHGEBIETE (Int. Cl.³)</b></td></tr>
<tr><td>A</td><td><u>AT - B - 246 485</u> (ALFA-LAVAL AG)<br>* Seite 1, Zeilen 11 bis 16; Fig. *<br>--</td><td>1</td><td>A 01 D 43/08<br>A 01 D 89/00<br>A 01 F 29/00</td></tr>
<tr><td>A</td><td><u>DE - B - 1 186 672</u> (MASCHINENFABRIK FAHR AG)<br>* ganzes Dokument *<br>----</td><td></td><td></td></tr>
<tr><td colspan="3"></td><td><b>KATEGORIE DER GENANNTEN DOKUMENTE</b><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument</td></tr>
<tr><td colspan="3">Der vorliegende Recherchenbericht wurde für alle Patentansprüche erstellt.</td><td>&: Mitglied der gleichen Patentfamilie, übereinstimmendes Dokument</td></tr>
<tr><td>Recherchenort<br>Berlin</td><td colspan="2">Abschlußdatum der Recherche<br>25-04-1980</td><td>Prüfer<br>SCHOFER</td></tr>
</table>

EPA form 1503.1  06.78